# DEMANDE DE BREVET EUROPEEN

(11) **EP 1 348 791 A1**
(43) Date de publication de la demande: **01.10.2003**
(21) Numéro de dépôt: 03356030.1
(22) Date de dépôt: 21.02.2003
(51) Int. Cl.: D04H 3/04, D04H 3/14, B29C 70/50, B29B 15/10

(54) **Complexe de renforcement**

(30) Priorité: 07.03.2002 FR 0202872
(71) Demandeur: CHOMARAT COMPOSITES, 75002 Paris (FR)
(72) Inventeur: Baudonnel, Jacques, 07160 Le Cheylard (FR)
(74) Mandataire: Thibault, Jean-Marc

(57) **Abrégé**

Selon l'invention, le complexe de renforcement **(1)** unidirectionnel, à base de nappes de fils, est caractérisé en ce que les dites nappes de fils sont constituées : d'une première nappe **(2)** de fils **(3)** de renfort parallèles entre eux, d'une deuxième nappe **(4)** de fils **(5)** de liage composés d'une âme fibreuse enrobée d'une matière thermoplastique et s'étendant transversalement aux fils **(3)** de la première nappe **(2)** en étant croisés sans entrelacement, lesdits fils **(3)** de renfort de la première nappe **(2)** étant liés, au moins localement aux fils **(5)** de liage de la deuxième nappe **(4)**, par fusion de la matière thermoplastique, et éventuellement d'une troisième nappe **(6)** de fils **(7)** de renfort parallèles entre eux et à ceux de la première nappe **(2)** et liés, au moins localement, aux fils **(5)** de liage enrobés par fusion de la matière thermoplastique, les fils **(5)** de liage enrobés de la deuxième nappe **(4)** étant emprisonnés entre les fils **(3)** de renfort de la première nappe **(2)** et les fils **(7)** de renfort de la troisième nappe **(6)**.

## Description

La présente invention est relative au domaine des produits de renforcement unidirectionnels à caractère cohérent, qui sont plus particulièrement destinés à constituer des armatures.

Dans de nombreux domaines, il est souhaitable de pouvoir renforcer un produit fabriqué de manière à accroître certaines caractéristiques mécaniques conférées par la matière constitutive mise en oeuvre pour la réalisation du dit produit. Il est ainsi connu d'utiliser des armatures de renforcement en relation avec le ciment, le béton, les matières plastiques et les résines.

Dans les domaines ci-dessus, une armature de renforcement est constituée, généralement à partir d'un réseau maillé qui est confectionné ou produit à partir de fibres qui peuvent être unidirectionnelles pour certaines applications ou tissées en laizes de plus ou moins grande largeur.

Une telle armature de renforcement est, par exemple, constituée d'un complexe de renfort unidirectionnel composé à partir de nappes de fibres ou fils de verre ou de carbone ou d'aramide qui sont liées par des coutures en lignes ou en zig-zag au moyen d'un fil en polyester. Un tel produit présente un certain nombre d'inconvénients parmi lesquels il faut citer un état de surface marqué dû à la présence de coutures créant des surépaisseurs . Un tel état de surface est, dans certains cas, incompatible avec l'application visée. De plus, la couture vient serrer les fils de renfort diminuant ainsi l'accessibilité de ces fils pour la résine qui sera ultérieurement injectée lors de la fabrication de pièces composites.

Parmi les inconvénients, il convient aussi de citer le coût de production d'un tel produit, étant donné que les machines à mettre en oeuvre doivent posséder des têtes multi-aiguilles pour l'établissement des coutures en ligne ou en zig-zag, chaque aiguille devant nécessairement être alimentée avec un fil propre. La mise en service d'une telle machine demande donc un travail préparatoire important qui vient grever le prix de production du produit.

Un autre inconvénient tient aussi à la présence de fils de couture en matière différente de celle des fibres de verre ou de carbone ou d'aramide constitutifs des nappes.

L'art antérieur, notamment le brevet US 4,460,633, propose d'utiliser des renforcements non-tissés à base de nappes de fils croisés, comportant au moins une première nappe de fils de chaîne et une deuxième nappe de fils de trame imprégnés d'un agent adhésif, les deux nappes étant liées à leur intersection. L'imprégnation des fils de trame avec l'agent adhésif est réalisée lors de la conception des renforcements, le procédé d'imprégnation étant délicat à mettre en oeuvre. Il est en effet très difficile, voire impossible de ne pas également imprégner les fils de chaîne, ce qui a pour conséquence de nuire aux propriétés mécaniques futures des matériaux renforcés obtenus ultérieurement.

Dans ce contexte, l'objet de l'invention est de remédier à ces inconvénients en proposant un nouveau complexe de renforcement unidirectionnel à caractère cohérent et semi-rigide et se présentant sous une forme plane qui soit obtenu selon un procédé simplifié. Par complexe de renforcement unidirectionnel, on entend un complexe fibreux dans lequel les fils assurant la fonction de renforcement du complexe sont tous orientés dans la même direction et sont donc tous sensiblement parallèles entre eux. Ces fils peuvent être répartis en une ou deux nappes. Par caractère cohérent, il convient de considérer que le produit selon l'invention est réalisé de manière à présenter une tenue propre et à être capable de résister à certaines contraintes de manipulation, voire de mise en oeuvre pour l'obtention d'un produit semi-fini ultérieur.

Pour atteindre l'objectif ci-dessus, le complexe de renforcement unidirectionnel selon l'invention, à base de nappes de fils, est caractérisé en ce que les dites nappes de fils sont constituées :
- d'une première nappe de fils de renfort parallèles entre eux,
- d'une deuxième nappe de fils de liage composés d'une âme fibreuse enrobée d'une matière thermoplastique et s'étendant transversalement aux fils de la première nappe en étant croisés sans entrelacement, lesdits fils de renfort de la première nappe étant liés, au moins localement aux fils de liage de la deuxième nappe, par fusion de la matière thermoplastique,
- et éventuellement d'une troisième nappe de fils de renfort parallèles entre eux et à ceux de la première nappe et liés, au moins localement, aux fils de liage enrobés par fusion de la matière thermoplastique, les fils de liage enrobés de la deuxième nappe étant emprisonnés entre les fils de renfort de la première nappe et les fils de renfort de la troisième nappe. La liaison du complexe selon l'invention est réalisée à partir de fils enrobés, déjà disponibles sur le commerce. L'utilisation de tels fils enrobés permet de supprimer l'étape d'imprégnation lourde à mettre en oeuvre. Les risques d'imprégnation des autres nappes est également écartés.

La présente invention a également pour objet un procédé de fabrication d'un complexe de renforcement unidirectionnel selon l'invention qui comprend les étapes suivantes :
■ constituer une première nappe de fils de renfort parallèles entre eux, et superposer sur cette première nappe une deuxième nappe de fils de liage composés d'une âme fibreuse enrobée d'une matière thermoplastique s'étendant transversalement aux fils de renfort de la première nappe en étant croisés sans entrelacement,
■ lier lesdites nappes à leur intersection par thermocompressage.

Diverses autres caractéristiques ressortent de la description faite ci-dessous en référence aux dessins annexés qui montrent, à titre d'exemples non limitatifs, des formes de réalisation de l'objet de l'invention.
La **fig. 1** est une perspective partielle d'un complexe de renforcement conforme à l'invention.
La **fig. 2** est une coupe partielle prise, volontairement à plus grande échelle, sensiblement selon le plan **I-I** de la **fig. 1.**
La **fig. 3** est une coupe partielle prise volontairement à plus grande échelle, sensiblement selon le plan **II-II** de la **fig. 1.**
La **fig. 4** est une coupe, analogue à la **fig. 2,** mais illustrant une autre variante de réalisation.
La **fig. 5** est une coupe, analogue à la **fig. 3,** illustrant une autre variante de réalisation.
La **fig. 6** est une coupe, analogue à la **fig. 2,** mais illustrant une autre variante de réalisation.
La **fig. 7** est une coupe, analogue à la **fig. 2,** mais illustrant une autre variante de réalisation.

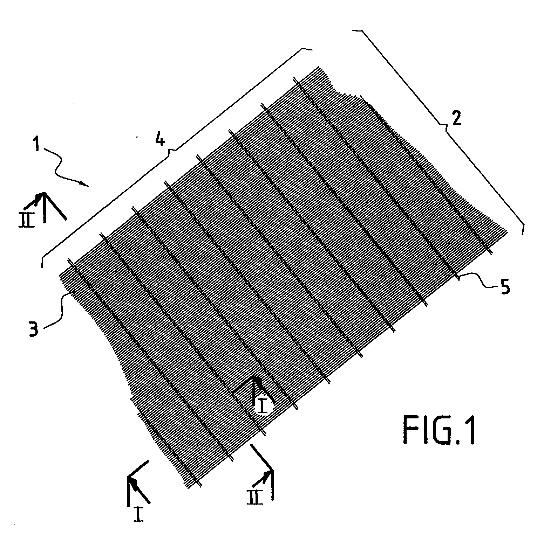

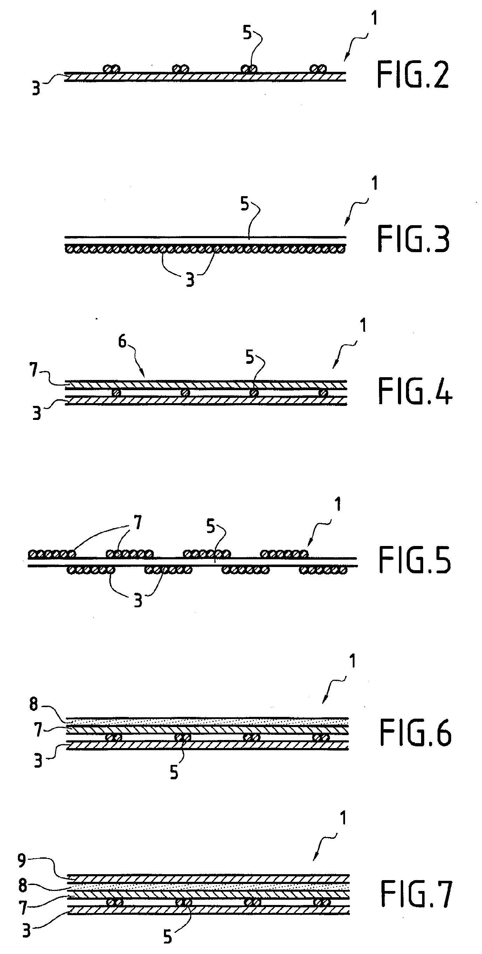

La **fig. 1** montre que le complexe de renforcement selon l'invention, désigné dans son ensemble par la référence **1**, comporte au moins une première nappe **2** de fils de renfort **3**, appelés par convention fils de chaîne par analogie avec les procédés par tissage, et qui s'étendent parallèlement entre eux. Comme le montrent la **fig. 1,** ces fils de renfort **3** sont de préférence jointifs, afin d'obtenir un complexe de renforcement sensiblement non ajouré. La liaison entre les fils de renfort de la première nappe est assurée par une seconde nappe **4** de fils de liage **5** composés d'une âme fibreuse enrobée d'une matière thermoplastique, appelés par convention fils de trame, qui s'étendent aussi parallèlement entre eux et qui sont croisés sans entrelacement avec les fils de renfort **3** de la première nappe **2**. Dans les exemples illustrés aux **fig. 1 et 2,** les fils de liage **5** enrobés s'étendent selon une direction générale qui est orthogonale à celle des fils de renfort **3**. Il doit, cependant, être considéré qu'une orientation oblique pourrait aussi être retenue. Les fils de liage **5** enrobés comportent une âme à base d'une matière similaire à celle des fils de renfort **3**, qui est enrobée d'une couche de matière thermoplastique.

La seconde nappe **4** de fils de liage **5** est beaucoup moins dense que la première nappe **2** de fils de renfort **3** et forme en fait un réseau parallèle ajouré. Dans la seconde nappe **4**, les fils de liage **5** sont espacés. Il peut être envisagé que les fils de liage **5** enrobés soient répartis par groupes de deux, trois ou quatre fils, régulièrement espacés. L'espacement existant entre chaque fil de liage ou groupe de fils de liage étant réalisé selon un pas d'espacement, de préférence régulier, avantageusement compris entre 1 et 10 cm.

Par opposition aux fils de liage **5** enrobés de la seconde nappe **4**, les fils de renfort **3** de la première nappe sont non-enrobés. Les fils de liage **5** enrobés de la seconde nappe assure la cohésion du complexe de renforcement 1 selon l'invention, alors que les fils de renfort **3** de la première nappe assure la fonction de renfort et ce de façon unidirectionnel. Dans le cas du complexe unidirectionnel selon l'invention, on peut considérer que 100 % des fils assurant la fonction de renfort sont orientés dans la même direction, à savoir la direction du renforcement. Comme illustré aux **Fig. 1, 2** et **3,** les fils de renfort **3** de la première nappe **2** sont beaucoup plus nombreux que les fils de liage **5** enrobés de la seconde nappe **4**, c'est pourquoi le complexe selon l'invention est qualifié de complexe de renfort unidirectionnel, les fils de renfort **3** de la première nappe **2** donnant la direction de renforcement.

Les nappes **2** et **4** sont associées pour posséder une tenue relative conférant un caractère cohérent au complexe de renforcement **1**. L'interliaison entre les fils de renfort **3** de la première nappe **2** et les fils de liage **5** enrobés de la deuxième nappe **4** est assurée par fusion ou ramollissement, de la matière thermoplastique enrobant les fils de liage **5**, suivi de son retour à l'état solide. La liaison entre les fils de renfort **3** de la première nappe **2** et les fils de liage **5** enrobés de la deuxième nappe 4 se fait à leur intersection et ce uniquement grâce à la matière thermoplastique servant d'enrobage aux fils de liage **5**. L'enrobage des fils de liage **5** doit être suffisant pour permettre de lier la totalité des fils de renfort **3** de la première nappe **2** à la deuxième nappe **4**. A titre d'exemple, on pourra utiliser des fils de liage **5** présentant entre 10 et 500 g de matière thermoplastique pour 1 000 mètres linéaires et à raison, par exemple, de un fil de liage tous les centimètres.

Selon un mode de réalisation préféré, représenté notamment à la fig. **4**, le produit **1** selon l'invention présente une troisième nappe **6** de fils de renfort **7** parallèles entre eux et à ceux de la première nappe **2**, les fils de liage **5** enrobés de la deuxième nappe **4** étant emprisonnés entre les fils de renfort **3** de la première nappe **2** et les fils de renfort **7** de cette troisième nappe **6**. Là encore, il est implicite que les fils de renfort **7** de la troisième nappe **6** sont non-enrobés. Les fils de renfort **7** de cette troisième nappe **6** sont également liés, au moins localement, aux fils de liage **5** enrobés, par fusion de la matière thermoplastique, la liaison ayant lieu à l'intersection des fils de renfort **7** de la troisième nappe **6** avec les fils de liage **5** enrobés de la seconde nappe **4**. La quantité de matière thermoplastique doit donc être adaptée pour que la liaison de la première nappe **2** avec la deuxième nappe **4** et la liaison de la troisième nappe **6** avec la deuxième nappe **4** soient assurées. La nappe **4** de fils de liage **5** est beaucoup moins dense que la ou les nappes de fils de renfort. Les fils de liage sont présents en quantité juste nécessaire pour assurer la liaison entre les fils de renfort. Aussi, de façon avantageuse, au moins 95 % en poids du complexe selon l'invention est constitué de fils de renfort **3** et éventuellement **7**.

Dans les dessins annexés, les nappes **2** et **6** de fils de renfort **3** et **7** sont représentées avec une seule couche de fils de renfort, pour plus de clarté. Bien entendu, dans la pratique, ces nappes sont constituées généralement de faisceaux de fils de renfort s'étendant sur plusieurs couches.

Les fils de renfort **3** et **7** peuvent être jointifs dans chacune des nappes **2** et **6**. Il peut également être prévu que les fils de renfort **3** et **7** soient disposés en mèches, les mèches de la première nappe **2** étant, de préférence, jointives avec les mèches de la troisième nappe **6**, comme illustré à la Fig. **5**. Préférentiellement, ces mèches s'étendent à espace constant et l'espace pour la nappe **2** est identique à l'espace pour la nappe **6**. La possibilité d'avoir des fils de renfort jointifs dans l'une des nappes **2** ou **6** et des fils de renfort disposés en mèches dans l'autre nappe n'est pas non plus à exclure. Dans tous les cas illustrés dans la présente invention, les fils de renfort répartis en une ou éventuellement deux nappes, forment un réseau unidirectionnel de renforcement assurant au complexe selon l'invention une couverture sensiblement égale à 100 %. Le complexe selon l'invention est donc préférentiellement non-ajouré, c'est-à-dire que les fils de renfort présentent une couverture sensiblement égale à 100%.

A titre non limitatif, les fils de renfort **3** et **7** peuvent chacun indépendamment posséder un titre compris entre 20 et 1 000 tex pour des fils d'aramide, entre 68 et 9 600 tex pour des fils de verre et entre 68 et 6 000 tex pour des fils de carbone. Ces fils peuvent se présenter sous la forme de monobrins de section droite transversale circulaire ou analogue, de monobrins à caractère plat ou sous une forme multifilamentaire, étalée ou non, à la manière d'une mèche ou, encore, organisée pour que les filaments s'étendent parallèlement entre eux. De manière préférée, les fils de renfort sont multifilamentaires. Les fils de renfort peuvent être avec ou sans torsion. De façon avantageuse, les fils de renfort peuvent également, dans la première nappe **2** et/ou la troisième nappe **6**, être voluminisés ou texturés et joueront alors une fonction supplémentaire de réserve pour la matière ou résine thermodure qui sera ultérieurement injectée.

Les fils de liage **5** enrobés sont, de manière générale, plus raides et présentent, par exemple, un titre compris entre 30 et 600 tex. Néanmoins, il peut être considéré que la fonction de renforcement du complexe selon l'invention est principalement assurée par les fils de renfort **3** de la première nappe et éventuellement les fils de renfort **7** de la seconde nappe quand celle-ci est présente. Les fils de liage **5** enrobés ont quant à eux pour unique fonction d'assurer la cohérence du complexe et sont tous orientés sensiblement dans la même direction.

Les fils de renfort **3** et **7**, ainsi que l'âme fibreuse des fils de liage **5** enrobés sont, par exemple, dans une matière choisie parmi les suivantes : verre, carbone, aramide, synthétiques Haute Performance (HP). La matière thermoplastique est choisie parmi les suivantes : le polypropylène, le polyéthylène, la polyamide, le polyéthylène téréphtalate, le polyester, l'éthylènevinylacétate et leurs mélanges.

Les fils de renfort **3** sont, de préférence, de même nature et composition pour l'ensemble de la première nappe **2**. Il en est de même pour l'âme des fils de liage **5** enrobés de la deuxième nappe **4** et pour les fils de renfort **7** de la troisième nappe **6**.

La présente invention a également pour objet un procédé de fabrication d'un complexe de renforcement selon l'invention qui comprend les étapes suivantes :
■ constituer une première nappe **2** de fils de renfort **3** parallèles entre eux, et superposer sur cette première nappe **2**, une deuxième nappe **4** de fils de liage **5** enrobés d'une matière thermoplastique s'étendant transversalement aux fils de renfort **3** de la première nappe **2** en étant croisés sans entrelacement,
■ lier lesdites nappes **2** et **4** à leur intersection par thermocompressage.

Les fils de renfort **3**, dits de chaîne, constituant la première nappe **2** sont déposés et tendus dans le sens de production selon des techniques connues de l'homme de l'art mettant, par exemple, en oeuvre un couple de cylindre et rouleau. Les fils de trame **5** de la deuxième nappe **4** sont, par exemple, déposés à l'aide d'un chariot trameur ou d'une machine turbine. Une nouvelle nappe **6** de fils de chaîne **7** peut alors être superposée à la nappe de fil de trame. Les différentes nappes sont ensuite passées dans une zone de chauffage avec action de calandrage, de manière à faire fondre l'enduction des fils de liage **5** et à réaliser par cette fusion un collage entre les fils des nappes, de manière à conférer une cohésion entre les différentes nappes **2, 4** et **6** et procurer une tenue propre au complexe de renforcement 1 qui peut alors être manipulé et utilisé pour transformation.

Des conditions opératoires convenables pour atteindre un tel résultat font, par exemple, intervenir une montée en température dans une enceinte de l'ordre de 160 à 230 °C selon les matériaux matrice utilisés, puis l'établissement d'une pression par calandrage comprise entre 0,5 à 5 bars avant d'imposer un refroidissement à température ambiante. Ainsi, le produit **1** selon l'invention peut être obtenu de manière simple et propre. Un tel produit **1** est également facilement stockable, manipulable et sa découpe est aisée. Le produit selon l'invention est parfaitement adapté pour servir d'armature de renfort pour des résines ou bitumes. Un tel produit se caractérise néanmoins par une faculté de déformation élastique, le rendant éventuellement enroulable.

La **fig. 6** montre une autre variante de réalisation selon laquelle le complexe de renforcement **1** peut être associé sur au moins l'une de ses grandes faces **1a** ou **1b**, en surface des fils de renfort **3** de la première nappe **2** et/ou en surface des fils de renfort 7 de la troisième nappe **6** à une couche **8** de poudre thermoplastique anti-effilochage, compatible avec les résines de transformation ultérieures. Cette couche **8** a pour fonction de renforcer la cohésion du complexe de renforcement, notamment lorsque les fils de chaîne de renfort sont nombreux et donc d'améliorer sa manutention. La poudre anti-effilochage sera, par exemple, constituée ou à base de résine époxy ou polyéthylène térephtalate. Une telle couche peut présenter un grammage de dépôt à l'unité de surface compris entre 2 et 50 g/m². Cette poudre anti-effilochage est déposée afin de recouvrir au moins partiellement les fils de renfort de la première nappe **2** et/ou de la troisième nappe **6** et la liaison entre la couche **8** et la première nappe **2** de fils de renfort **3** et/ou la troisième nappe **6** de fils de renfort **7**, peut être obtenue par la même opération que celle établissant la liaison entre la première nappe **2** et la deuxième nappe **4**, d'une part, et la troisième nappe **6** et la deuxième nappe **4**, d'autre part.

De plus, la couche **8** permet par la suite de parer le complexe selon l'invention. En effet, comme le montre la **fig. 7**, cette couche **8** de poudre anti-effilochage est, par exemple, associée à un voile **9** d'aspect. Ce voile **9** peut être un non-tissé en matière synthétique comme le polyéthylène térephtalate ou en verre. Sa tenue sur le complexe **1** est assurée grâce à la poudre anti-effilochage.

Il pourrait également être prévu d'associer cette couche **8** de poudre thermoplastique à un mat de fibres coupées, par exemple de fibres de verre.

Le complexe de renforcement **1** selon l'invention peut être utilisé pour la fabrication d'engins de glisse, de skis ou de pales d'éolienne, ou d'éléments pultrudés.

L'invention ci-dessus n'est pas limitée aux exemples décrits et représentés, car diverses modifications peuvent y être apportées sans sortir de son cadre.

## Revendications

1. Complexe de renforcement **(1)** unidirectionnel, à base de nappes de fils, **caractérisé en ce que** les dites nappes de fils sont constituées :
- d'une première nappe **(2)** de fils **(3)** de renfort parallèles entre eux,
- d'une deuxième nappe **(4)** de fils **(5)** de liage composés d'une âme fibreuse enrobée d'une matière thermoplastique et s'étendant transversalement aux fils **(3)** de la première nappe **(2)** en étant croisés sans entrelacement, lesdits fils **(3)** de renfort de la première nappe **(2)** étant liés, au moins localement aux fils **(5**) de liage de la deuxième nappe **(4)**, par fusion de la matière thermoplastique,
- et éventuellement d'une troisième nappe **(6)** de fils **(7)** de renfort parallèles entre eux et à ceux de la première nappe **(2)** et liés, au moins localement, aux fils **(5)** de liage enrobés par fusion de la matière thermoplastique, les fils **(5)** de liage enrobés de la deuxième nappe **(4)** étant emprisonnés entre les fils **(3)** de renfort de la première nappe **(2)** et les fils **(7)** de renfort de la troisième nappe **(6)**.

2. Complexe selon la revendication 1, **caractérisé en ce qu'**au moins 95 % en poids du complexe de renforcement **(1)** est constitué de fils de renfort **(3,7)**.

3. Complexe selon la revendication 1 ou 2 **caractérisé en ce que** les fils de renfort **(3,7)** présentent une couverture sensiblement de 100 %.

4. Complexe de renforcement **(1)** selon l'une des revendications 1 à 3, **caractérisé en ce que** les fils **(5)** de liage enrobés présentent un titre compris entre 30 et 600 tex.

5. Complexe de renforcement **(1)** selon l'une des revendications 1 à 3, **caractérisé en ce que** les fils **(5)** de liage enrobés présentent un enrobage de matière thermoplastique compris entre 10 et 500 g pour 1 000 mètres linéaires.

6. Complexe de renforcement **(1)** selon l'une des revendications 1 à 3, **caractérisé en ce que** les fils **(3)** de renfort de la première nappe **(2)** sont voluminisés ou texturés.

7. Complexe de renforcement **(1)** selon l'une des revendications 1 à 3, **caractérisé en ce que** les fils **(3)** de renfort de la première nappe **(2)** sont recouverts au moins partiellement d'une poudre **(8)** thermoplastique anti-effilochage.

8. Complexe de renforcement **(1)** selon la revendication 7, **caractérisé en ce que** la poudre **(8)** thermoplastique anti-effilochage est recouverte par un voile **(9)** d'aspect intimement lié au produit **(1)** par fusion au moins partielle de la poudre **(8)** anti-effilochage.

9. Complexe de renforcement **(1)** selon la revendication 8, **caractérisé en ce que** la poudre **(8)** anti-effilochage est associée à un mat de fibre de verre coupées.

10. Complexe de renforcement **(1)** selon la revendication 3, **caractérisé en ce que** les fils **(3 et 7)** de renfort sont jointifs dans la première nappe **(2)** et éventuellement dans la troisième nappe **(6).**

11. Complexe de renforcement **(1)** selon la revendication 3, **caractérisé en ce que** les fils de renfort sont répartis en une première nappe **(2)** de fils de renfort **(3)** parallèles entre eux et disposés en mèche et en une troisième nappe **(6)** de fils de renfort **(7)** parallèles entre eux et à ceux de la première nappe, également disposés en mèche, les mèches de la première nappe étant jointives avec celles de la troisième nappe afin que les fils de renfort présentent une couverture sensiblement égale à 100%.

12. Complexe de renforcement selon l'une des revendications 1 à 3, **caractérisé en ce que** les fils de liage **(5)** sont répartis par groupe de deux, trois ou quatre.

13. Complexe de renforcement selon l'une des revendications 1 ou 12, **caractérisé en ce que** l'espacement existant entre chaque fil de liage **(5)** ou groupe de fils de liage **(5)** est réalisé selon un pas compris entre 1 et 10 cm.

14. Complexe de renforcement **(1)** selon la revendication 1 à 3, **caractérisé** en ce la matière thermoplastique est choisie parmi les suivantes : le polypropylène, le polyéthylène, la polyamide, la polyéthylène téréphtalate, le polyester, l'éthylène vinyl acétate ou leurs mélanges.

15. Complexe de renforcement **(1)** selon l'une des revendications 1 à 3, **caractérisé en ce que** les fils **(3 et 7)** de renfort ainsi que l'âme enrobée des fils **(5)** de liage sont en une matière choisie parmi les suivantes : verre, carbone, aramide, synthétiques HP.

16. Procédé de fabrication d'un complexe de renforcement **(1)** selon l'une des revendications 1 à 15, **caractérisé en ce qu'**il comprend les étapes suivantes :
■ constituer une première nappe **(2)** de fils de renfort **(3)** parallèles entre eux, et superposer sur cette première nappe **(2)** une deuxième nappe **(4)** de fils de liage **(5)** composés d'une âme fibreuse enrobée d'une matière thermoplastique s'étendant transversalement aux fils de renfort **(3)** de la première nappe **(2)** en étant croisés sans entrelacement,
■ lier lesdites nappes **(2 et 4)** à leur intersection par thermocompressage.

17. Utilisation d'un complexe de renforcement **(1)** selon l'une des revendications 1 à 15, pour la fabrication de skis, de pales d'éoliennes, ou d'éléments pultrudés.
